# EUROPEAN PATENT APPLICATION

(11) **EP 4 825 729 A1**
(43) Date of publication of application: **21.10.2026**
(21) Application number: 26169938.3
(22) Date of filing: 31.03.2026
(51) Int. Cl.: B64D 1/06, B64D 1/04, B64D 1/12

(54) **ELECTRICALLY POWERED STORE DEPLOYMENT SYSTEM FOR AIRCRAFT AND RELATED METHODS**

(30) Priority: 15.04.2025 US 202519180020
(71) Applicant: Eagle Technology, LLC, Melbourne, FL 32919 (US)
(72) Inventor: HIRSHMAN, Brian S., Plainview, 11803 (US)
(74) Representative: Schmidt, Steffen J.

(57) **Abstract**

An electrically powered store deployment system **20** for an aircraft **21** may include a housing **22** to be carried by the aircraft, and a release arrangement **30** carried by the housing and configured to selectively release a store **23** from the aircraft. The store deployment system **20** may also include an ejection arrangement **40** carried by the housing **22** and configured to selectively eject the store **23** away from the aircraft **21** upon release of the store by the release arrangement **30.** The ejection arrangement **40** may include at least one electric motor carried **41** by the housing **22,** and at least one ejector piston **42** carried by the housing and movable between stored and ejection positions responsive to the at least one electric motor.

## Description

### Technical Field

The present invention relates to the field of aviation, and, more particularly, to aircraft store deployment and related methods.

### Background

An aircraft mounted store deployment system may typically use an ejection force exerted onto the store during a release. The ejection force may be induced by powering one or more ejection pistons that push on the store during a release. One approach to powering the ejection piston is with a pyrotechnic ejection. During a pyrotechnic ejection, an explosive may be ignited to generate pressure to thereby expand the ejection piston.

Another approach to powering an ejection piston is through a pneumatic ejection. During a pneumatic ejection, compressed gas is expanded to generate pressure, which expands the ejection piston. An exemplary pneumatic ejection store deployment system may include any of the BRU-Series pneumatic ejection systems provided by L3Harris^{®} of Melbourne, Florida, for example.

### Summary

An electrically powered store deployment system for an aircraft may include a housing to be carried by the aircraft, and a release arrangement carried by the housing and configured to selectively release a store from the aircraft. The electrically powered store deployment system may also include an ejection arrangement carried by the housing and configured to selectively eject the store away from the aircraft upon release of the store by the release arrangement. The ejection arrangement may include at least one electric motor carried by the housing, and at least one ejector piston carried by the housing and movable between stored and ejection positions responsive to the at least one electric motor.

The at least one electric motor may include at least one rotary electric motor. The at least one ejector piston may include a toothed-shaft and an enlarged head coupled thereto, for example. The ejection arrangement may include a drive gear engaging the toothed-shaft, and a drive belt coupled between the at least one rotary electric motor and the drive gear. The at least one ejector piston may include a pair of ejector pistons, for example, and the at least one rotary electric motor may comprise a pair of rotary electric motors, in some embodiments.

The at least one electric motor may include at least one linear electric motor, for example, in other embodiments. The at least one ejector piston may include a pair of ejector pistons. The at least one linear electric motor may comprise a single linear electric motor, for example. The single linear motor may include a fixed track and a movable shuttle carried thereby, for example.

The at least one piston may include a toothed-shaft and an enlarged head coupled thereto. The ejection arrangement may include a respective drive gear engaging each corresponding toothed-shaft, and a respective pulley arrangement adjacent each opposing end of the fixed track and coupled to each corresponding drive gear. The ejection arrangement may also include a respective drive belt coupled between the movable shuttle and each corresponding pulley arrangement, for example.

The electrically powered store deployment system may include a controller coupled to the release arrangement and the ejection arrangement. The store may include a store body and at least one hook carried by the store body, and the release arrangement may be configured to engage and release the at least one hook, for example.

A method aspect is directed to a method of deploying a store from an aircraft with electrical power. The method may include operating a release arrangement carried by a housing carried by the aircraft to selectively release the store from the aircraft. The method may include operating an ejection arrangement carried by the housing to selectively eject the store away from the aircraft upon release of the store by the release arrangement. The ejection arrangement may include at least one electric motor carried by the housing, and a plurality of ejector pistons carried by the housing and movable between stored and ejection positions responsive to the at least one electric motor.

### Brief Description of the Drawings

FIG. 1 is a schematic diagram of an aircraft including an electrically powered store deployment system in accordance with an embodiment.
FIG. 2 is a side view of the electrically powered store deployment system of FIG. 1.
FIG. 3 is an enlarged side view of an exemplary ejection arrangement of the electrically powered store deployment system of FIG. 2.
FIG. 4 is a side cutaway view of the electrically powered store deployment system of FIG. 2 with the ejection pistons in the stored position.
FIG. 5 is another side cutaway view of the electrically powered store deployment system of FIG. 2 with the ejection pistons in the stored position and with the store hooks disengaged.
FIG. 6 is another side cutaway view of the electrically powered store deployment system of FIG. 2 with the ejection pistons partially extended during store deployment.
FIG. 7 is another side cutaway view of the electrically powered store deployment system of FIG. 2 with the ejection pistons in the extended position during store deployment.
FIG. 8 is a side cutaway view of an electrically powered store deployment system in accordance with another embodiment.
FIG. 9 is another side cutaway view of the electrically powered store deployment system of FIG. 8 with the ejection pistons partially extended during store deployment.
FIG. 10 is another side cutaway view of the electrically powered store deployment system of FIG. 8 with the ejection pistons in the extended position during store deployment.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

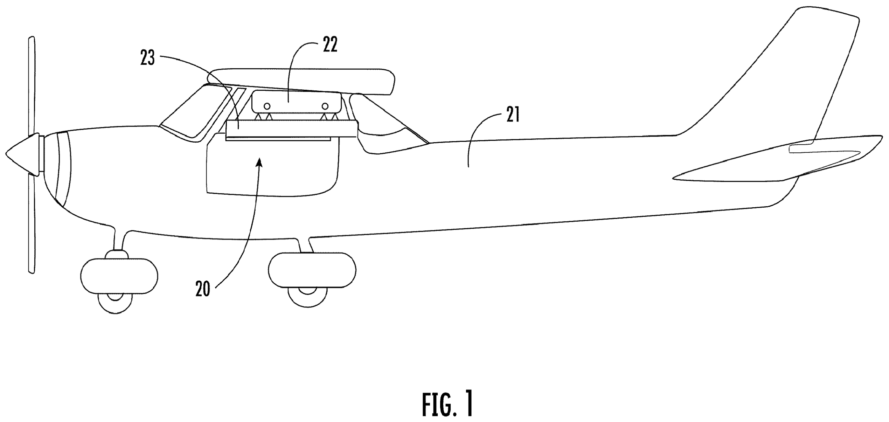

Referring initially to FIG. 1, an electrically powered store deployment system **20** for an aircraft **21** is first described. The aircraft **21** is illustratively in the form of a manned aircraft, but those skilled in the art will appreciate that the aircraft may be manned or unmanned, and/or driven by any type of propulsion system (e.g., jet, propeller, rotor blade, rocket, etc.). In some embodiments, the aircraft **21** may not have a propulsion system, for example, similar to a glider.

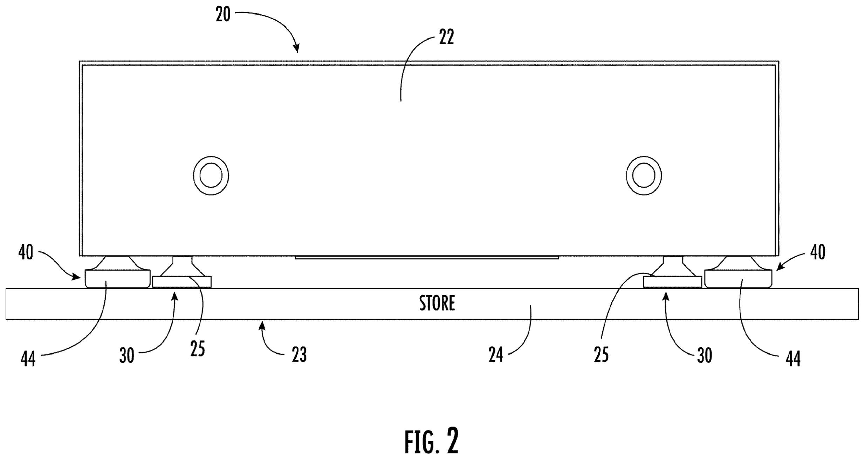

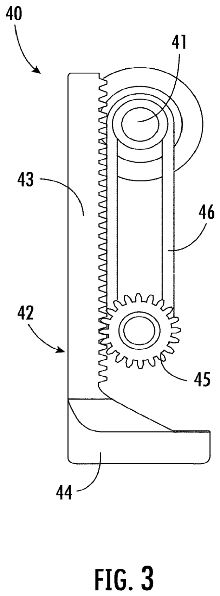

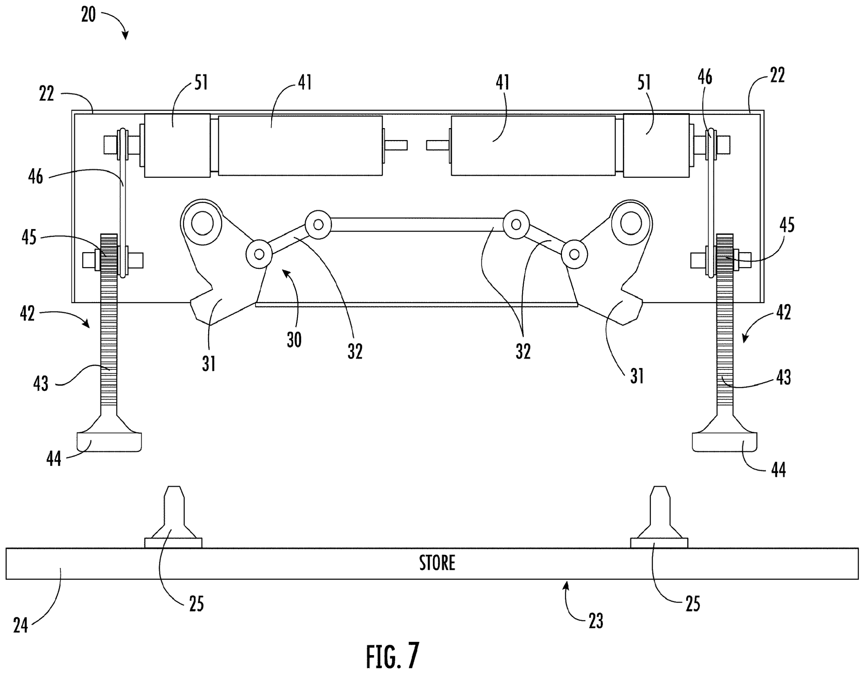

Referring additionally to FIGS. 2-7, the electrically powered store deployment system **20** includes a housing **22** carried by the aircraft **21.** The housing **22** is illustratively carried underneath and coupled to a wing of the aircraft **21.** However, the housing **22** in some embodiments may not be carried underneath a wing, rather may be carried by a bottom fuselage of the aircraft, for example. The housing **22** has a bottom permitting a store **23** carried by the housing to be deployed from the bottom. As will be appreciated by those skilled in the art, a "store" on an aircraft, particularly in a military context, refers to any device or equipment intended for internal or external carriage and mounted on the aircraft's suspension and release equipment, whether or not intended to be separated in flight, for example, a missile, bomb, and/or other ordnance, powered or unpowered. The store **23** may include equipment or contents for other operations/applications as will also be appreciated by those skilled in the art.

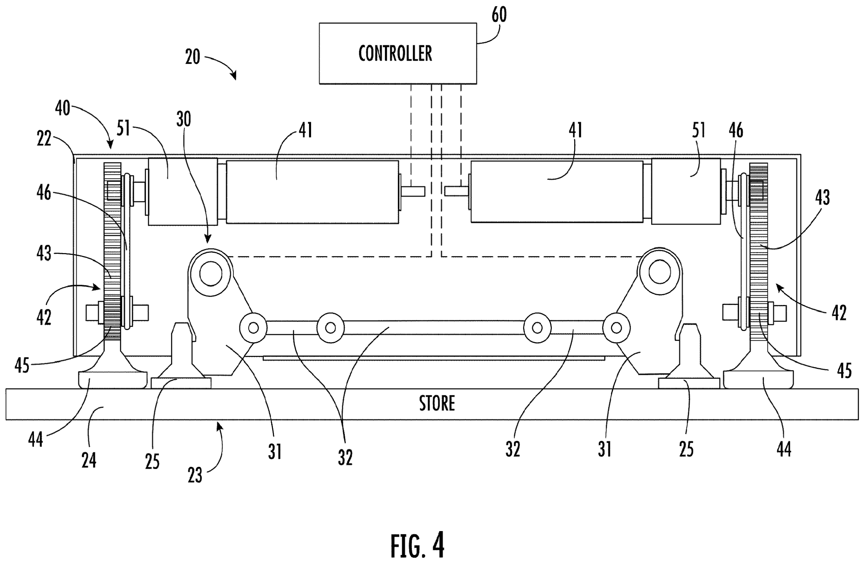

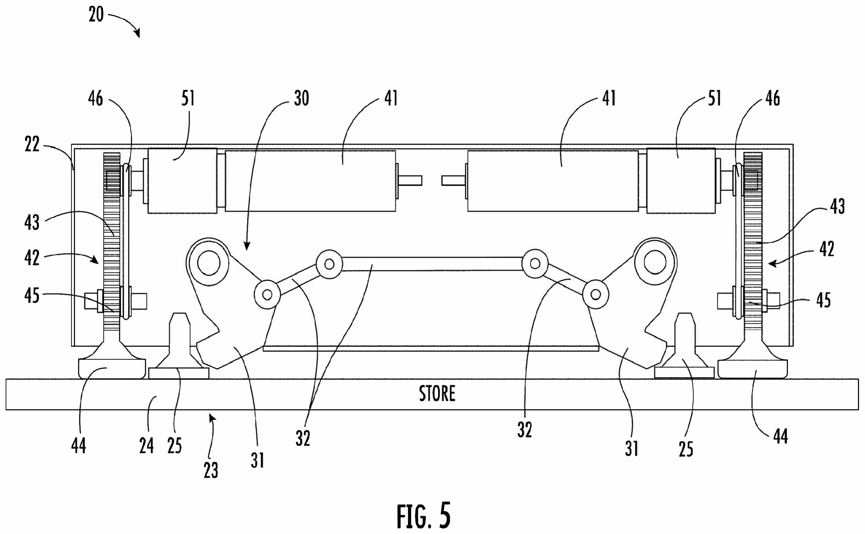

A release arrangement **30** is carried by the housing **22.** The release arrangement **30** selectively releases the store **23** from the aircraft **21.** More particularly, the store **23** includes a store body **24** and store hooks **25** carried by the store body. The release arrangement **30** includes rotatable locks **31** (e.g., in the form of hooks) coupled via the linkage **32.** During carriage or storage of the store **23,** the rotatable locks **31** engage the store hooks **25,** and the linkage **32** operates to keep the rotatable locks engaged. Upon a desired release, the rotatable locks **31** are rotated (e.g., toward each other) to disengage the store hooks **25** (FIGS. 5-6). The rotatable locks **31** may be rotated by an electric motor, pneumatically, or hydraulically, for example, and controlled by a controller **60** (FIG. 4). The controller **60** may be carried by the aircraft **21** or remote from the aircraft, and/or may receive input from within the aircraft or remotely from the aircraft (e.g., from the ground). The controller **60** may include discrete circuitry or components, for example, wireless communications circuitry, actuators, etc., that cooperate to perform the operations to release the store **23** from the aircraft **21.**

The electrically powered store deployment system **20** also includes an ejection arrangement **40** carried by the housing **22.** The ejection arrangement **40** selectively ejects the store **23** away from the aircraft **21** upon release of the store by the release arrangement **30.** The ejection arrangement **40** illustratively includes a pair of electric motors that are in the form of rotary electric motors **41.** While there are two rotary electric motors **41** illustrated, those skilled in the art will recognize that there may be any number of rotary electric motors, including even a single rotary electric motor. Moreover, while rotary electric motors **41** are illustrated, the electric motors may be another type of electric motor, for example, as will be described in further detail below.

The rotary electric motors **41** are carried by the housing **22,** for example, along the top side thereof. In an embodiment, a respective gear box **51** may be coupled (e.g., laterally in line with) the rotary electric motors **41.** The gear boxes **51** may be each provide increased rotational speed for quicker operation of the ejection arrangement or quicker ejection of the store **23** away from the aircraft **21.** The gear boxes **51** may lower the speed of the rotary electric motors **41,** and increase to the torque, for example, while lowering the speed.

The ejection arrangement **40** also includes ejector pistons **42,** illustratively a pair thereof, carried by the housing **22** adjacent opposite ends thereof and oriented transverse to the rotary electric motors **41.** Each ejector piston **42** includes a toothed-shaft **43** and an enlarged head **44** coupled to the toothed-shaft. The enlarged head **44** is adjacent the store **23** in the stored position and provides a larger contact surface area with the store during ejection, as will described in further detail below. While a pair of ejector pistons **42** is illustrated, those skilled in the art will appreciate that there may be any number of ejector pistons, including one.

A drive gear **45** engages the toothed-shaft **43** and together therewith may define a rack-and-pinion arrangement. The drive gear **45** is carried by the housing **22** adjacent the opposite ends of the housing. A drive belt **46** is coupled between the shaft of the rotary electric motor **41** and the drive gear **45.**

Accordingly, the ejector pistons **42** are movable between stored and ejection positions responsive to the rotary electric motors **41.** Additionally, those skilled in the art will appreciate that the location or arrangement of the drive gear **45** relative to the rotary motor **41** permits the ejector pistons **42** to be movable to the ejection position while maintaining engagement between the toothed-shaft **43** and the drive gear **45.** Moreover, while a toothed-shaft configuration has been described herein, in an embodiment, a toothed-shaft **43** may not be included, but rather, a direct coupling arrangement may be used.

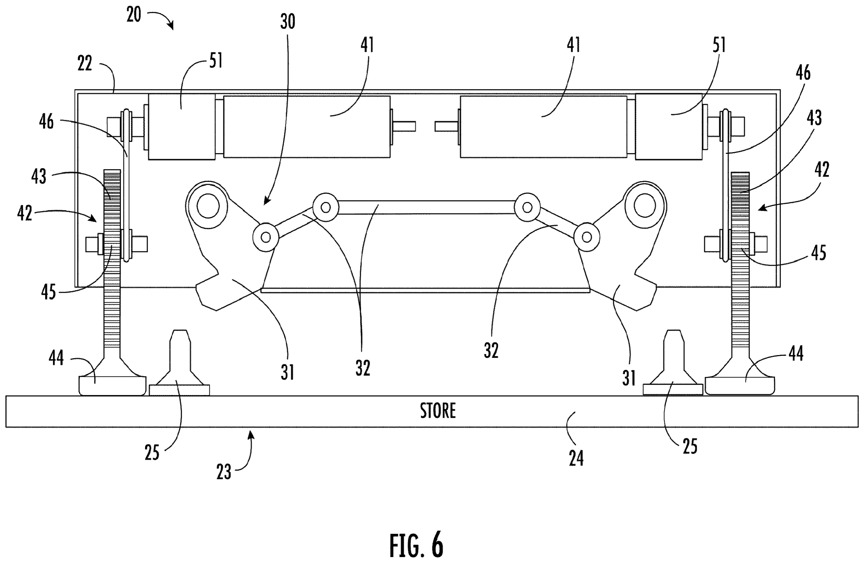

During operation, for example, when desirous of releasing the store **23,** the controller **60** may operate the rotary electric motors **41** that, via the drive belt **46** and the drive gear **45,** move the ejector pistons **42** to the ejection or extended positions, pushing the store **23** away from the housing **22** (FIGS. 6-7). The controller **60** may be the same controller for operating the release arrangement **30** (FIG. 4). Of course, the controller **60** may be a different controller or discrete circuitry or components for performing operations related to the rotary electric motors **41.** Operation of the ejection arrangement **40** may be simultaneous with operation of the release arrangement **30** (e.g., timed in coordination and synchronized with the release of the store hooks **25** from the locks **31**). In some embodiments, particularly where the ejection arrangement **40** operates at a relatively high speed, the ejection arrangement may be operated upon operation of the release arrangement **30.**

As will be appreciated by those skilled in the art, powering multiple ejector pistons **42** each with a dedicated motor **41** may permit a variable pitch rate of the ejected store. **23.** Pitch rate generally refers to the angle of the store **23** relative to the aircraft **21** during a release. For example, for some stores **23** it may be desirable to be released "nose down", so the ejector piston **42** closer to that nose-side or forward of the aircraft **21** may apply greater force than the other ejector piston, aft-side. In some embodiments, a pitch rate may be achieved with one motor **41** driving multiple ejector pistons **42** (e.g., in the case of a linear motor, as will be described in further detail below), but it may be desirable to be a set rate using different gear/pulley ratios, for example, based upon a multi-speed transmission device.

The electrically powered store deployment system **20** may be particularly advantageous over other deployment techniques. For example, electrically powered ejection may offer relatively fast deployment (load and go) as compared to a pneumatic system, for example, which includes a pressure storage tank requiring time to pressurize. Also, relative to pneumatic systems, the electrically powered store deployment system **20** does not include the use of specialized equipment to fill and maintain gas pressure. In a pneumatic ejection system, filling or pressurizing to an operating pressure can delay aircraft deployment.

Additionally, unlike pyrotechnic ejection systems, the electrically powered store deployment system **20** does not involve regularly scheduled disassembly, cleaning, inspection, and component replacement. Safety may be increased as well as pyrotechnic ejection involves consideration for explosive charges.

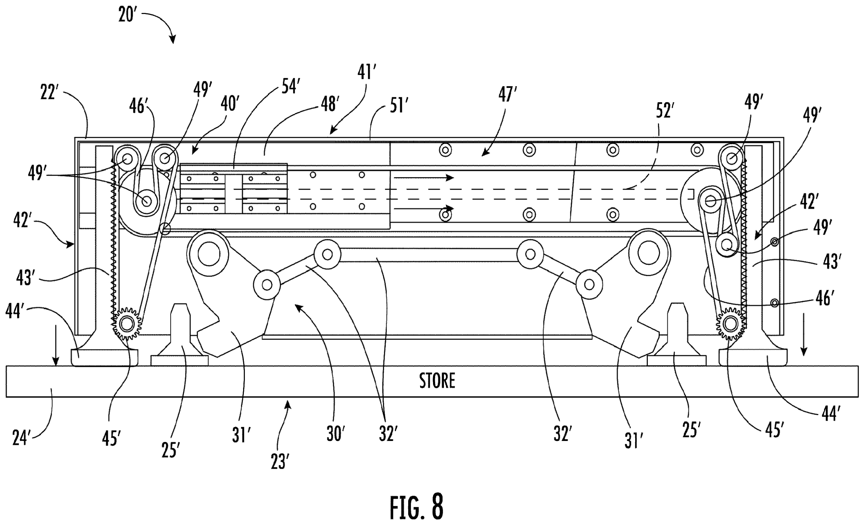

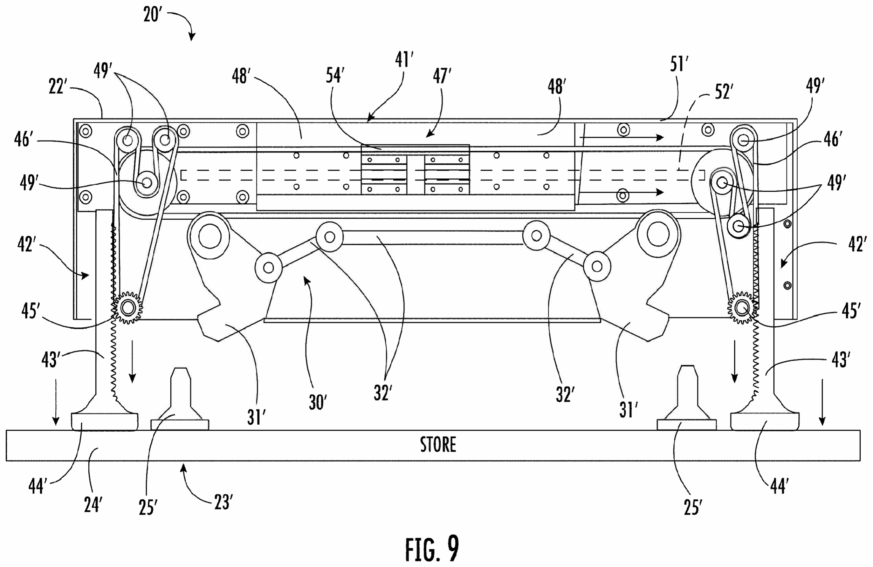

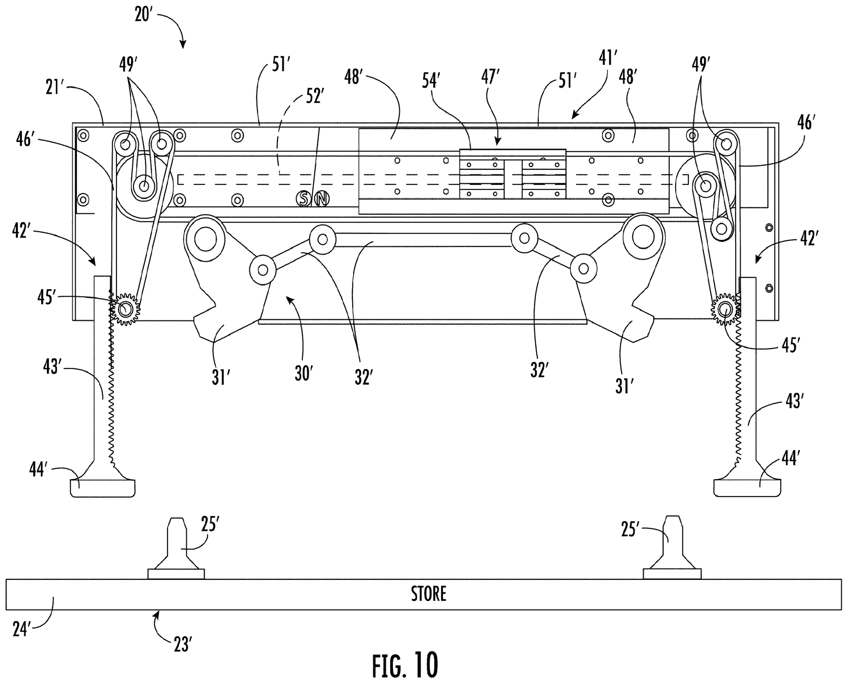

Referring now to FIGS. 8-10, in another embodiment of the electrically powered store deployment system **20',** rather than rotary electric motors, the electric motors may be in the form of a linear electric motor **41'.** Similar to the embodiments described above, while a single linear electric motor **41'** is illustrated, there may be more than one linear electric motor in other embodiments.

The linear electric motor **41'** may include a fixed track **47'** and a movable shuttle **48'** carried by the fixed track. The housing **22'** may include a cover or sidewall that includes a surface feature **52'** (e.g., protrusion or recess therein) that defines the fixed track **47'** or a portion thereof to serve as a transport guide for the movable shuttle **48'.**

The fixed track **47'** may include a magnetic track **51'** (i.e., stator) that is positioned on the top and bottom of the movable shuttle **48'.** The magnetic track **51'** may be defined by permanent magnets or an electromagnetic coil plate, as will be appreciated by those skilled in the art. The movable shuttle **48'** includes magnetic material (i.e., rotor).

Similarly to the above-described embodiments, a respective drive gear **45'** engages the toothed-shaft **43'** of each of the two ejector pistons **42'.** However, in contrast to the above-described embodiments, a respective pulley arrangement **49'** (e.g., in the form of a 3:1 compound pulley) is adjacent each opposing end of the fixed track **47'.** The pulley arrangement **49'** is coupled to each drive gear **45'** by way of a drive belt **46'.** In other words, the drive belt **46'** is coupled between the movable shuttle **48'** and the respective pulley arrangements **49'** and, more particularly, the drive belt **46'** is coupled to (e.g., secured by way of an attachment plate **54'**) to the movable shuttle so that the drive belt is driven by the movable shuttle. Other elements illustrated, but not specifically described, for example, the ejection arrangement **40',** the store **23',** store body **24',** store hooks **25',** release arrangement **30',** rotatable locks **31',** and linkage **32',** are similar to those described in the embodiments above. The pulley arrangement **49'** may be in the form of a different ratio compound pulley and/or may be a different pulley arrangement other than the exemplary arrangement in illustrated embodiments.

A method aspect is directed to a method of deploying a store **23** from an aircraft **21** with electrical power. The method includes include operating a release arrangement **30** carried by a housing **22** carried by the aircraft **21** to selectively release the store **23** from the aircraft. The method may include operating an ejection arrangement **40** carried by the housing **22** to selectively eject the store **23** away from the aircraft **21** upon release of the store by the release arrangement **30.** The ejection arrangement **40** may include at least one electric motor **41** carried by the housing **22,** and a plurality of ejector pistons **42** carried by the housing and movable between stored and ejection positions responsive to the at least one electric motor.

While several embodiments have been described herein, it should be appreciated by those skilled in the art that any element or elements from one or more embodiments may be used with any other element or elements from any other embodiment or embodiments. Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. An electrically powered store deployment system for an aircraft, comprising:
a housing to be carried by the aircraft;
a release arrangement carried by the housing and configured to selectively release a store from the aircraft; and
an ejection arrangement carried by the housing and configured to selectively eject the store away from the aircraft upon release of the store by the release arrangement;
the ejection arrangement comprising
at least one electric motor carried by the housing, and
at least one ejector piston carried by the housing and movable between stored and ejection positions responsive to the at least one electric motor.

2. The electrically powered store deployment system of Claim 1 wherein the at least one electric motor comprises at least one rotary electric motor; and/or
comprising a controller coupled to the release arrangement and the ejection arrangement; and/or
wherein the store comprises a store body and at least one hook carried by the store body; and wherein the release arrangement is configured to engage and release the at least one hook.

3. The electrically powered store deployment system of Claim 2 wherein the at least one ejector piston comprises a toothed-shaft and an enlarged head coupled thereto; and wherein the ejection arrangement comprises a drive gear engaging the toothed-shaft, and a drive belt coupled between the at least one rotary electric motor and the drive gear.

4. The electrically powered store deployment system of Claim 3 wherein the at least one ejector piston comprises a pair of ejector pistons, and the at least one rotary electric motor comprises a pair of rotary electric motors.

5. The electrically powered store deployment system of Claim 1 wherein the at least one electric motor comprises at least one linear electric motor.

6. The electrically powered store deployment system of Claim 5 wherein the at least one ejector piston comprises a pair of ejector pistons; and wherein the at least one linear electric motor comprises a single linear electric motor.

7. The electrically powered store deployment system of Claim 6 wherein the single linear motor comprises a fixed track and a movable shuttle carried thereby.

8. The electrically powered store deployment system of Claim 7 wherein each ejector piston comprises a toothed-shaft and an enlarged head coupled thereto; and wherein the ejection arrangement comprises:
a respective drive gear engaging each corresponding toothed-shaft;
a respective pulley arrangement adjacent each opposing end of the fixed track and coupled to each corresponding drive gear; and
a respective drive belt coupled between the movable shuttle and each corresponding pulley arrangement.

9. An electrically powered store deployment system for an aircraft, comprising:
a housing to be carried by the aircraft;
a release arrangement carried by the housing and configured to selectively release a store from the aircraft; and
an ejection arrangement carried by the housing and configured to selectively eject the store away from the aircraft upon release of the store by the release arrangement;
the ejection arrangement comprising
at least one electric motor carried by the housing,
a plurality of ejector pistons carried by the housing and movable between stored and ejection positions responsive to the at least one electric motor, each ejector piston comprising a toothed-shaft and an enlarged head coupled thereto,
a respective drive gear engaging each corresponding toothed-shaft, and
a respective drive belt coupled between the at least one electric motor and each corresponding drive gear.

10. The electrically powered store deployment system of Claim 9 wherein the at least one electric motor comprises at least one rotary electric motor.

11. The electrically powered store deployment system of Claim 10 wherein the plurality of ejector pistons comprises a pair of ejector pistons, and the at least one rotary electric motor comprises a pair of rotary electric motors.

12. The electrically powered store deployment system of Claim 9 wherein the at least one electric motor comprises at least one linear electric motor.

13. The electrically powered store deployment system of Claim 12 wherein the plurality of ejector pistons comprises a pair of ejector pistons; and wherein the at least one linear electric motor comprises a single linear electric motor.

14. The electrically powered store deployment system of Claim 13 wherein the single linear motor comprises a fixed track and a movable shuttle carried thereby.

15. The electrically powered store deployment system of Claim 14 wherein the ejection arrangement comprises a respective pulley arrangement adjacent each opposing end of the fixed track and coupled to each corresponding drive gear; and wherein the respective drive belt is coupled between the movable shuttle and each corresponding pulley arrangement.

16. A method of deploying a store from an aircraft with electrical power, the method comprising:
operating a release arrangement carried by a housing carried by the aircraft to selectively release the store from the aircraft; and
operating an ejection arrangement carried by the housing to selectively eject the store away from the aircraft upon release of the store by the release arrangement, the ejection arrangement comprising at least one electric motor carried by the housing, and a plurality of ejector pistons carried by the housing and movable between stored and ejection positions responsive to the at least one electric motor.

17. The method of Claim 16 wherein the at least one electric motor comprises at least one rotary electric motor.

18. The method of Claim 17 wherein each ejector piston comprises a toothed-shaft and an enlarged head coupled thereto; and wherein the ejection arrangement comprises a respective drive gear engaging each corresponding toothed-shaft, and a respective drive belt coupled between the at least one rotary electric motor and each corresponding drive gear.

19. The method of Claim 18 wherein the plurality of ejector pistons comprises a pair of ejector pistons, and the at least one rotary electric motor comprises a pair of rotary electric motors.

20. The method of Claim 16 wherein the at least one electric motor comprises at least one linear electric motor.

21. The method of Claim 20 wherein the plurality of ejector pistons comprises a pair of ejector pistons; and wherein the at least one linear electric motor comprises a single linear electric motor.

22. The method of Claim 21 wherein the single linear motor comprises a fixed track and a movable shuttle carried thereby.

23. The method of Claim 22 wherein each piston comprises a toothed-shaft and an enlarged head coupled thereto; and wherein the ejection arrangement comprises:
a respective drive gear engaging each corresponding toothed-shaft;
a respective pulley arrangement adjacent each opposing end of the fixed track and coupled to each corresponding drive gear; and
a respective drive belt coupled between the movable shuttle and each corresponding pulley arrangement.
